Europäisches Patentamt

European Patent Office

Office européen des brevets

(11) Veröffentlichungsnummer: **0 001 551**
**B1**

(12) **EUROPÄISCHE PATENTSCHRIFT**

(21) Anmeldenummer: **78100846.1**

(22) Anmeldetag: **07.09.78**

(51) Int. Cl.³: **G 03 B 41/18**

(54) **Evakuierbare Röntgenfilmkassette**

(30) Priorität: **13.10.77 DE 2746032**

(43) Veröffentlichungstag der Anmeldung:
**02.05.79 Patentblatt 79/09**

(45) Bekanntmachung des Hinweises auf die Patenterteilung:
**10.12.80 Patentblatt 80/25**

(84) Benannte Vertragsstaaten:
**BE FR GB SE**

(56) Entgegenhaltungen:
**DE - B - 1 288 904**
**DE - U - 7 435 536**
**US - A - 2 590 892**
**US - A - 3 884 818**

(73) Patentinhaber: **Agfa-Gevaert AG Camera-Werk**
**Postfach**
**D - 8000 München 90 (DE)**

(72) Erfinder: **Schmidt, Manfred**
**Neusatzerstrasse 2**
**D - 8000 München 82 (DE)**
**Färber, Heinrich**
**Dietlindenstrasse 9**
**D - 8000 München 40 (DE)**

Evakuierbare Röntgenfilmkassette

Die Erfindung betrifft eine evakuierbare Röntgenfilmkassette mit zwei aufeinanderlegbaren Kassettenteilen, welche durch eine Scharniereinrichtung miteinander verbunden sind, mit die beiden Kassettenteile in einer Verschlußstellung geschlossen haltenden Verriegelungselementen, mit einer in den Kassettenraum führenden Saugleitung und mit einer licht- und luft- dichten, an einem Kassettenteil angebrachten Folie.

Bei Röntgenaufnahmen in der Mammographie wird zur Verbesserung der Aufzeichnung unter dem Film eine Verstärkerfolie angeordnet. Mit dieser Verstärkerfolie können die Aufnahmen durch einen verstärkten Kontrast verbessert werden. Damit kann aber auch die Dosisbelastung der Patientin verringert werden, indem die Bestrahlungszeit verkürzt wird. Für ein zufriedenstellendes Zusammenwirken von Verstärkerfolie und Röntgenfilm ist es aber wichtig, daß der Röntgenfilm möglichst dicht und mit gleichmäßigem Druck an der Verstärkerfolie anliegt.

Bei bekannten Röntgenfilmkassetten der eingangs genannten Art kann die Halterung von Verstärkerfolie und Röntgenfilm im allgemeinen nur durch zusätzliche Mittel erreicht werden. Aus der DE-B-1 288 904 ist beispielsweise eine Röntgenfilmkassette der eingangs genannten Art bekannt, bei der die Folie mit ihrem Rand ununterbrochen an einem Kassettenteil befestigt ist. Bei geschlossener Kassette drückt der vorstehende Rand des anderen Kassettenteils gegen den geklebten Folienrand und bildet so eine Licht- und Luftabdichtung. Bei dieser bekannten Kassette muß am Kassettenunterteil ein besonderer, vorstehender Dichtrand vorgesehen werden. Bei einer einmal etwas verzogenen Kassette besteht dann die Gefahr, daß dieser Dichtrand nicht mehr rundumlaufend und damit luftabdichtend an dem Folienrand anliegt. Außerdem ist bei der bekannten Kassette eine verhältnismäßig aufwendige Scharniereinrichtung notwendig.

Aus der US-A-2 590 892 ist es zwar bekannt, die beiden Kassettenteil mit einem flexiblen Band miteinander zu verbinden. Eine solche Maßnahme ist wegen der geringen Festigkeit jedoch nur für kuvertähnliche Kassetten bzw. Verpackungen geeignet.

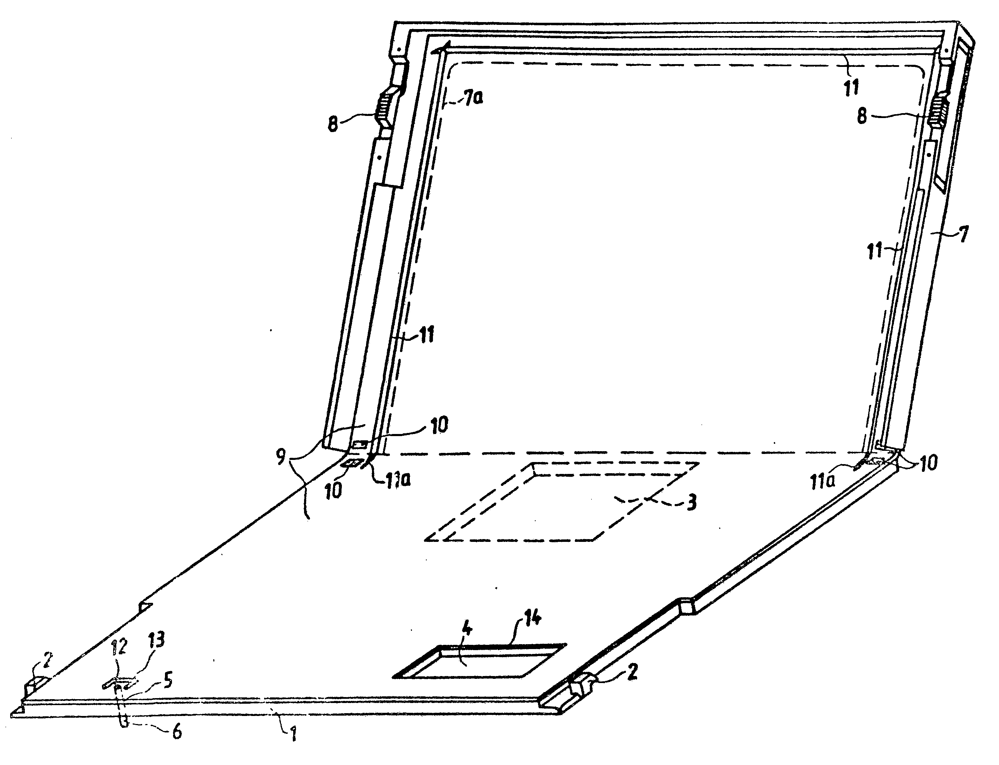

In der US-A 3 884 818 (Fig. 8) ist eine aus einem Stück gespritzte Kunststoffkassette beschrieben, bei der das Scharnier durch einen entsprechend dünnen Kunststoffstreifen gebildet ist. Eine derartige Kassette kommt jedoch äußerst teuer, da bei der großen Vielzahl von unterschiedlichen Kassettentypen für jeden Typ ein eigenes, sehr teures Spritzwerkzeug benötigt wird.

Aufgabe der Erfindung ist es daher, eine Röntgenfilmkassette der eingangs genannten Art zu schaffen, in der Röntgenfilm und Verstärkerfolie in der gewünschten Weise zusammengehalten sind und die zudem noch einfach im Aufbau und preiswert ist.

Diese Aufgabe wird durch die im Kennzeichen des Anspruchs 1 beschriebene Erfindung gelöst.

Mit der Erfindung können die mechanischen Einrichtungen wie Scharniere und labyrinthartige Lichtabdichtungen zwischen den beiden Kassettenteil enfallen. Damit sind an der Kassette weniger Winkel vorhanden, so daß diese gut zu reinigen ist. Von großer Bedeutung ist, daß bei der erfindungsgemäßen Kassette das Filmmaterial bis unmittelbar an den Kassettenrand reichen kann. Dies ist aber bei der Mammographie sehr wertvoll, damit Röntgenbilder möglichst bis zum Brustansatz hergestellt werden können.

Es ist zwar bereits vorgeschlagen worden, Röntgenfilm und Verstärkerfolie in einem Kunststoffkuvert, das mit einer Klammer vakuumdicht verschlossen werden kann, unterzubringen. Der Nachteil dieser Verpackung liegt in der zeitaufwendigen Handhabung des Filmeinlegens. Außerdem besteht durch die flexible Hülle die Gefahr, daß entweder der Röntgenfilm nicht plan zu liegen kommt oder daß sich an irgendeiner Stelle Falten bilden. Schließlich ist die Entfernung von Staub aus dieser Hülle problematisch, der auf der Aufnahme nur schwer von Mikrokalk zu unterscheiden ist. Damit ist aber die Gefahr von Fehldiagnosen sehr groß.

Weitere Einzelheiten und Vorteile der Erfindung ergeben sich aus den Unteransprüchen im Zusammenhang mit der Beschreibung eines Ausführungsbeispieles, das anhand einer Figur eingehend erläutert ist. Die einzige Figur zeigt eine perspektivische Ansicht einer erfindungsgemäßen Röntgenfilmkassette.

In der Figur ist mist 1 ein als Bodenplatte ausgebildeter erster Kassettenteil bezeichnet, an welchem Haken 2 für den Kassettenverschluß ausgeformt sind. Ferner ist in der Bodenplatte 1 ein Dosisfenster 3, ein Patientendatenfenster 4 sowie eine Bohrung 5 mit einem Vakuumanschluß 6 vorgesehen.

Satt des dargestellten Vakuumanschlusses kann an der Bodenplatte auch ein nach außen weisender Saugkopf angebracht sein, zwischen dem und der Bohrung 5 eine Lichtabdichtung vorgesehen ist. Der Saugkopft ist zweckmäßigerweise in der Bodenplatte versenkt, so daß die Kassette durch einfaches Verschieben über einer Saugöffnung in dem Aufnahmetisch leicht positioniert werden kann. Die Verschiebefreiheit ist natürlich nur so weit möglich, als der Saugkopf die Saugöffnung überdeckt.

Der zweite Kassettenteil besteht aus einem dreiseitigen Winkelrahmen 7, an dem Verriegelungselemente 8 vorgesehen sind, die bei aufeinandergelegten Kassettenteilen mit den Haken 2 des ersten Kassettenteiles 1 zusammenwirken.

Die beiden Kassettenteile 1 und 7 werden durch eine Vakuumfolie 9 miteinander verbunden, welche einerseits auf im wesentlichen der gesamten Fläche der Bodenplatte 1 und andererseits auf einem Schenkel 7a des Winkelrahmens 7 aufgeklebt ist. Damit sind die beiden Kassettenteile 1 und 7 gelenkartig miteinander verbunden, so daß mechanische Scharniere entfallen können.

Damit sich die Klebestellen zwischen Vakuumfolie 9 und den Kassettenteilen 1 und 7 an den Stellen der größten Beanspruchung nicht lösen, können an den Seitenrändern in der Nähe der Scharnierstelle kleine Halteplättchen 10 vorgesehen sein, welche an den Kassettenteilen 1 bzw. 7 befestigt sind und damit die Vakuumfolie 9 an ihrer Unterlage festhalten.

An der Vakuumfolie 9 sind schräg nach außen gerichtete Dichtlippen 11 ausgeformt, welche etwa entlang des Rahmens 7 verlaufen. Diese Dichtlippen 11 werden zwecks Gegenhalt von den das Bestrahlungsfenster bildenden Schenkeln 7a des Winkelrahmens 7 überdeckt. Die Dichtlippen 11 können entweder bei einem geschlossenen Rahmen an allen vier Seiten vorgesehen sein, oder, wie dies in der Zeichnung dargestellt ist, nur an drei Seiten, wobei sie an der Scharnierseite weggelassen sind. Zu diesem Zweck sind die beiden zur Scharnierstelle laufenden Dichtlippen 11 etwas verlängert, wobei diese ein kurzes Stück über die Scharnierstelle herausreichenden Verlängerungen 11a kleiner in der Höhe sind. Damit wird erreicht, daß bei zusammengelegten Kassettenteilen eine Vakuumdichtigkeit an der Scharnierstelle gegeben ist. An den Ecken kreuzen sich die aufeinander zulaufenden Dichtlippen 11. Dabei ist der obere Rippenrand bis etwa zur Dichthöhe (Dicke von Film und Verstärkerfolie) heruntergezogen.

An dem Teil der Vakuumfolie 9, die auf der Bodenplatte 1 aufgeklebt ist, ist oberhalb der Vakuumbohrung 5 in der Bodenplatte 1 eine Öffnung 12 vorgesehen, die von einer gegenüber den Dichtlippen 11 kleineren Erhöhung 13 teilweise umgeben ist. Diese Erhöhung 13 dient dazu, daß sich bei Evakurieren der geschlossenen Kassette nicht die Gegenseite der Vakuumfolie an die Öffnung 12 anlegt und diese verschließt.

Außerdem ist in der Folie 9 eine mit dem Patientendatenfenster 4 in der Bodenplatte 1 fluchtende Ausnehmung 14 vorgesehen, damit der Film mit den Patientendaten mittels Licht belichtet werden kann. Das Fenster ist mit einem Kunststoffglas vakuumdicht verschlossen und zwischen Folie 9 und der Bodenplatte 1 besteht ohnehin eine Vakuumdichtigkeit.

Für eine zufriedenstellende Arbeitsweise mit der erfindungsgemäßen Röntgenfilmkassette soll die Vakuumfolie 9 neben der selbstverständlichen Lichtdichtigkeit auch eine geringe Röntgenabsorption aufweisen. Ferner soll eine hohe Elastizität und Leitfähigkeit gegeben sein. Letztere dient dazu, daß beim Abwischen keine statische Aufladung entsteht, welche den Staub anziehen würde.

Das Arbeiten mit der beschriebenen Röntgenfilmkassette geschieht nun auf höchst einfache Weise. In der Dunkelkammer können Film und Verstärkerfolie eingelegt werden, wobei die Dichtlippen 11 zugleich als Positionierungselemente für diese beiden Teile vorgesehen werden können. Nach dem Verschließen der Kassette wird diese auf den Aufnahmetisch gelegt und über den Vakuumanschluß 6 evakuiert, wobei die Vakuumfolien sowie Röntgenfilm und Verstärkerfolie zusammengedrückt werden. Zum Zwecke der Bestrahlung ist die Kassette so ausgerichtet, daß die Scharnierstelle zum Brustkasten weist und diesen berührt. Nachdem der Film und die Verstärkerfolie im Knick der Vakuumfolie 9 anliegen und die rahmenfreie Scharnierstelle, d. h. der Folienknick am Körper des Patienten anliegt, kann insbesondere bei einer Mammographie-Aufnahme auch der Brugtansatz bildmäßig erfaßt werden.

Der Vorteil der erfindungsgemäßen Kassette ist auch darin zu sehen, daß durch den Ersatz eines mechanischen Scharniers ihr Öffnungswinkel größer als 180 Grad ist. Der Rand der geschlossenen Kassette an der Scharnierstelle ist glatt und ohne Vorsprünge oder scharfe Kanten, durch welche eine Verletzungsgefahr gegeben wäre. Die Vakuumfolie kann bei Beschädigung verhältnismäßig leicht ausgewechselt werden, so daß die Kassettenteile stets wieder verwendet werden können. Durch den stabilen Rahmen kann die Kassette auch in automatischen Be- und Entladegeräten benützt werden.

**Patentansprüche**

1. Evakuierbare Röntgenfilmkassette mit zwei aufeinanderlegbaren Kassettenteilen, welche durch eine Scharniereinrichtung miteinander verbunden sind, mit die beiden Kassettenteile in der Verschlußstellung geschlossen haltenden Verriegelungselementen, mit einer in den Kassettenraum führenden Saugleitung und mit einer licht und luftdichten, an einem Kassettenteil angebrachten Folie, dadurch gekennzeichnet, daß die Folie (9) an beiden Kassettenteilen (1, 7) befestigt ist und damit die Scharniereinrichtung bildet und daß eine Folienhälfte vorspringende, im Bereich des Folienrandes verlaufende Dichtelemente (11) aufweist.

2. Röntgenfilmkassette nach Anspruch 1, dadurch gekennzeichnet, daß der im Betrieb der Strahlungsquelle zugewandte Kassettenteil (7) aus einem dreischenkligen Winkelrahmen besteht, auf dessen einem Winkelschenkel (7a) die Folie (9) angebracht ist, wobei die offene Seite des U-förmigen Winkelrahmens (7) an der Scharnierseite liegt, und daß die Dichtelemente (11) zumindest entlang der Befestigung der Folie (9) an dem Winkelrahmen (7) verlaufen.

3. Röntgenfilmkassette nach Anspruch 2, dadurch gekennzeichnet, daß die Dichtelemente (11) an der Scharnierstelle einen kurzen Fortsatz (11a) mit verringerter Höhe aufweisen.

4. Röntgenfilmkassette nach einem der Ansprüche 1 bis 3, dadurch gekennzeichnet, daß die Folie (9) außerhalb des Kassettenraumes an der Scharnierstelle mittels kleiner Metallplättchen (10) an den Kassettenteilen (1, 7) zusätzlich befestigt sind.

5. Röntgenfilmkassette nach einem der Ansprüche 1 bis 4, dadurch gekennzeichnet, daß die Saugleitung (6, 5) in einer Öffnung (12) der Folie (9) mündet und daß die Öffnung (12) teilweise von einer gegenüber den Dichtelementen (11) kleineren Erhöhung (13) umgeben ist, wobei zwischen Öffnung (12) und Saugstutzen eine Lichtabdichtung vorgesehen ist.

6. Röntgenfilmkassette nach Anspruch 5, dadurch gekennzeichnet, daß an der Bodenplatte (1) nach außen ein versenkter, mit der Öffnung (12) in Verbindung stehender Saugkopf vorgesehen ist.

7. Röntgenfilmkassette nach einem der Ansprüche 1 bis 6, dadurch gekennzeichnet, daß in der Folie (9) eine vakuumdicht abgeschlossene Ausnehmung (14) vorgesehen ist, welche mit einem in dem als Bodenplatte dienenden Kassettenteil (1) vakuumdicht eingesetzten, lichtdurchlässigen Fenster (4) fluchtet.

8. Röntgenfilmkassette nach einem der Ansprüche 1 bis 7, dadurch gekennzeichnet, daß die Kassettenteile (1, 7) aus Kunststoff, vorzugsweise aus glasfaserverstärktem Kunststoff und/oder die Folie (9) aus Polyurethan gefertigt ist.

9. Röntgenfilmkassette nach einem der Ansprüche 1 bis 8, dadurch gekennzeichnet, daß die Folie (9) an den Kassettenteilen angeklebt oder mit diesen verschweißt ist.

10. Röntgenfilmkassette nach einem der Ansprüche 1 bis 9, dadurch gekennzeichnet, daß die Dichtelemente elastisch sind.

11. Röntgenfilmkassette nach einem der Ansprüche 1 bis 10, dadurch gekennzeichnet daß die Dichtelemente schräg nach außen gerichtete Dichtlippen (11) sind, welche einstückig mit der Folie (9) ausgebildet, vorzugsweise mit der Folie gespritzt sind.

12. Röntgenfilmkassette nach Anspruch 11, dadurch gekennzeichnet, daß sich die Dichtlippen (11) an den Ecken kreuzen, wobei der obere Lippenrand in der Ecke bis etwa zur Dichthöhe heruntergezogen ist und die über die Ecken hinausgehende Lippenhöhe sich weiter verjüngt.

**Revendications**

1. Cassette de film radiographique pouvant être mise sous vide, comportant deux parties de cassette pouvant se poser l'une sur l'autre et reliées entre elles part un dispositif de charnière, des éléments de verrouillage qui maintiennent fermées les deux parties de cassette dans une position de fermeture, un tuyau d'aspiration conduisant à l'intérieur de la cassette et une feuille étanche à la lumière et à l'air, cassette caractérisée par le fait que la feuille étanche (9) est fixée aux deux parties de cassette (1, 7) et forme ainsi le dispositif de charnière et qu'une moitié de feuille présente des éléments d'étanchéité en saillie (11), situés dans la région du bord de la feuille.

2. Cassette selon la revendication 1, caractérisée par le fait que la partie de cassette (7) qui est tournée en service vers la source de rayons est formée d'un cadre en cornières à trois côtés, sur l'une des ailes (7a) duquel est disposée la feuille (9), le côté ouvert du cadre en cornières (7) étant situé an côté de charnière, en cornières (7) étant situé au côté de charnière, et que les éléments d'étanchéité (11) sont situés au moins le longe de la fixation de la feuille (9) au cadre en cornières (7).

3. Cassette selon la revendication 2, caractérisée par le fait que les éléments d'étanchéité (11) présentent à la zone de charnière un prolongement court (11a) de hauteur réduite.

4. Cassette selon l'une des revendications 1 à 3, caractérisée par le fait que la feuille (9) est en cutre fixée aux parties de cassette (1, 7), hors de l'espacement de cassette, dans la zone de charnière, au moyen de petites plaquettes métalliques (10).

5. Cassette selon l'une des revendications 1 à 4, caractérisée par le fait qu'un tuyau d'aspiration (6, 5) débouche dans une ouverture (12) de la feuille (9) et que l'ouverture (12) est partiellement entourée d'une saillie (13) plus petite que les éléments d'étanchéité (11), un joint d'étanchéité à la lumière étant prévu entre l'ouverture (12) et la tubulure d'aspiration.

6. Cassette selon la revendication 5, caractérisée par le fait que sur le fond (1) est prévue, vers l'extérieur, une tête d'aspiration encastrée reliée à l'ouverture (12).

7. Cassette selon l'une des revendications 1 à 6, caractérisée en ce que dans la feuille (9) est prévu un évidement (14) fermé de façon étanche au vide, aligné sure une fenêtre transparente (4) insérée de façon étanche au vide dans la partie de cassette (1) qui sert de fond.

8. Cassette selon l'une des revendications 1 à 7, caractérisée par, le fait que les parties de cassette (1, 7) sont fabriquées en matière synthétique, de préférence en matière synthétique renforcée de fibres de verre et la feuille (9) est réalisée en polyuréthane.

9. Cassette selon l'une des revendications 1 à 8, caractérisée par le fait que la feuille (9) est collée ou soudée aux parties des cassette.

10. Cassette selon l'une des revendications 1 à 9, caractérisée par le fait que les éléments d'étanchéité sont élastiques.

11. Cassette selon l'une des revendications 1 à 10, caractérisée par le fait que les éléments d'étanchéité sont des lèvres d'étanchéité (11) dirigées obliquement vers l'extérieur, faisant corps avec la feuille (9), de préférence moulées par injection en même temps que celle-ci.

12. Cassette selon la revendication 11, caractérisée que les lèvres d'étanchéité se croisent aux angles, le bord supérieur des lèvres descendant, à l'angle, à peu près jusqu'à la hauteur d'étanchéité et que la hauteur de lèvre dépassant les angles continue de diminuer.

## Claims

1. Evacuable X-ray film cassette having two cassette parts that can be placed one on top of the other and that are connected to one another by a hinge device, locking elements keeping the two cassette parts closed in the locked position, a suction pipe leading into the cassette chamber and a light-tight and air-tight sheet attached to one cassette part, characterised in that the sheet (9) is secured to both cassette parts (1, 7) and thus forms the hinge device and in that one half of the sheet has projecting sealing elements (11) extending in the area of the edge of the sheet.

2. X-ray film cassette according to claim 1, characterised in that the cassette part (7) facing the radiation source during operation consists of a three-legged angle frame on the one leg of the angle (7a) of which the sheet (9) is attached, the open side of the U-shaped angle frame (7) being on the hinge side, and in that the sealing elements (11) run along at least the fastening of the sheet (9) to the angle frame (7).

3. X-ray film cassette according to claim 2, characterised in that the sealing elements (11) have at the hinge position a short extension (11a) with a reduced height.

4. X-ray film cassette according to one of claims 1 to 3, characterised in that the sheet (9) is additionally fastened to the cassette parts (1, 7) outside the cassette chamber at the hinge position by means of small metal platelets (10).

5. X-ray film cassettes according to one of claims 1 to 4, characterised in that the suction pipe (6, 5) ends in an aperture (12) of the sheet (9) and in that the aperture (12) is partly surrounded by an elevation (13) that is smaller than the sealing elements (11), light exclusion being provided between the aperture (12) and the suction connection.

6. X-ray film cassette according to claim 5, characterised in that, on the outside of the base plate (1), a sunk section head is provided that is connected to the aperture (12).

7. X-ray film cassette according to one of claims 1 to 6, characterised in that in the sheet (9) is provided a recess (14) that is sealed off in a vacuum-tight manner and that is aligned with a transparent window (4) arranged in a vacuum-tight manner in the cassette part (1) serving as the base plate.

8. X-ray film cassette according to one of claims 1 to 7, characterised in that the cassette parts (1, 7) are made of plastics, preferably of glass fibre-reinforced plastics and/or the sheet (9) is made of polyurethane.

9. X-ray film cassette according to one of claims 1 to 8, characterised in that the sheet (9) is stuck to the cassette parts or is welded to these.

10. X-ray film cassette according to one of claims 1 to 9, characterised in that the sealing elements are resilient.

11. X-ray film cassette according to one of claims 1 to 10 characterised in that the sealing elements are sealing lips (11) sloping outwards that are integral with the sheet (9) and preferably injection-moulded with the sheet.

12. X-ray film cassette according to claim 11, characterised in that the sealing lips (11) intersect at the corners, the upper lip edge in the corner being pulled down to almost the sealing height and the height of the lip extending beyond the corners being further tapered.